# EUROPÄISCHE PATENTSCHRIFT

(11) **EP 4 148 219 B1**
(45) Veröffentlichungstag und Bekanntmachung des Hinweises auf die Patenterteilung: **15.05.2024**
(21) Anmeldenummer: 22188012.3
(22) Anmeldetag: 01.08.2022
(51) Int. Cl.: E05F 15/53, B60P 1/26, B62D 33/03

(54) **ANORDNUNG ZUR EINSTELLBAREN ANBRINGUNG EINES LINEAREN BETÄTIGUNGSELEMENTS AN EINER ÜBERGEORDNETEN STRUKTUR**
ARRANGEMENT FOR ADJUSTABLY ATTACHING A LINEAR ACTUATING ELEMENT TO A HIGHER-LEVEL STRUCTURE
DISPOSITIF POUR LE MONTAGE RÉGLABLE D'UN ACTIONNEUR LINÉAIRE SUR UNE STRUCTURE SUPÉRIEURE

(30) Priorität: 14.09.2021 DE 102021123776
(43) Veröffentlichungstag der Anmeldung: 15.03.2023
(73) Patentinhaber: Franz Xaver Meiller Fahrzeug- und Maschinenfabrik - GmbH & Co KG, 80997 München (DE)
(72) Erfinder: Knigge, René, 80636 München (DE)
(74) Vertreter: Weickmann & Weickmann PartmbB

(56) Entgegenhaltungen:
- EP-A1- 1 914 112
- EP-A2- 0 888 911
- DE-A1-102019 127 946
- GB-A- 2 029 335

## Beschreibung

Die vorliegende Erfindung betrifft eine Anordnung zur einstellbaren Anbringung eines linearen Betätigungselements an einer übergeordneten Struktur, ein Kipperfahrzeug mit wenigstens einer schwenkbaren Seitenwand und einer derartigen Anordnung sowie ein Verfahren zum Montieren eines entsprechenden Betätigungselements an dem Kipperfahrzeug.

Es sind vielerlei Anwendungen bekannt, zum Beispiel aus GB 2 029 335 A, EP 1 914 112 A1 oder EP 0 888 911 A2, in welchen ein lineares Betätigungselement an einer übergeordneten Struktur anzubringen ist, um dort eine Bewegung eines wie auch immer gelagerten weiteren Elements auszulösen. Wenngleich im Folgenden in erster Linie über Ausführungsbeispiele gesprochen werden wird, in welchen die übergeordnete Struktur ein Kipperfahrzeug und das lineare Betätigungselement eine Seitenwandpresse zum Betätigen einer Seitenwand des Kipperfahrzeugs ist, so versteht sich, dass die vorliegende Erfindung in ihrer allgemeinsten Form auch auf andere Kombinationen aus übergeordneten Strukturen und zu bewegenden Elementen anwendbar ist.

Wenn derartige lineare Betätigungselemente an festen Lagepunkten an der übergeordneten Struktur angebracht sind, so besteht keine Möglichkeit zum Ausgleich von Fertigungs- und Montagetoleranzen, und auch ein Nachstellen oder Nachjustieren der Montageposition des linearen Betätigungselements bei Verschleiß oder Setzung ist nicht mit einem vertretbaren Aufwand möglich. Insbesondere besteht im bereits angesprochenen konkreten Beispiel einer Seitenwandpresse eines Kipperfahrzeugs ferner die Gefahr, dass durch den erforderlichen Resthub, welcher für einen Toleranzausgleich der Presse bei deren Einbau eingehalten werden muss, bei einem vollen Ausfahren der Presse die Seitenwand und/oder die Eckrunge am Kipperaufbau des Fahrzeugs deformiert oder beschädigt wird.

Es ist somit die Aufgabe der vorliegenden Erfindung, eine Anordnung zur einstellbaren Anbringung eines linearen Betätigungselements an einer übergeordneten Struktur bereitzustellen, mittels welcher einerseits ermöglicht wird, das lineare Betätigungselement an einer optimalen Position zu montieren, sodass kein Resthub für einen Toleranzausgleich mehr vorgesehen werden muss und folglich im bereits angesprochenen Beispiel der Seitenwandpresse eines Kipperfahrzeugs die Presse bei geschlossener Seitenwand "auf Block" fahren kann und so das Deformieren der Seitenwand und der Eckrunge verhindert wird, während andererseits bei Verschleiß eine einfache Nachstellbarkeit der Position des linearen Betätigungselements ermöglicht wird.

Zu diesem Zweck umfasst die erfindungsgemäße Anordnung das bereits angesprochene lineare Betätigungselement, welches ein Gehäuse und ein aus dem Gehäuse herausragendes und gegenüber dem Gehäuse in einer Verlagerungsrichtung verlagerbares Druckstangenelement aufweist, wobei das Gehäuse wenigstens einen kreiszylindrischen Vorsprung aufweist, welcher in einer Richtung senkrecht zu der Verlagerungsrichtung des Druckstangenelements nach außen vorsteht, wenigstens ein der übergeordneten Struktur zugeordnetes Wandelement, welches eine kreisförmige Durchbrechung und wenigstens einen Montagepunkt aufweist, und wenigstens ein Exzenterelement mit einem kreiszylindrischen Körperabschnitt und einer Zylinderachse, wobei der Umfang des Körperabschnitts auf die kreisförmige Durchbrechung des wenigstens einen Wandelements angepasst und exzentrisch zu der Zylinderachse eine Aufnahmeöffnung für den wenigstens einen kreiszylindrischen Vorsprung des Gehäuses des Betätigungselements vorgesehen ist, wobei das Exzenterelement ferner einen Befestigungsabschnitt aufweist, welcher dazu eingerichtet ist, eine Befestigung davon in einer Mehrzahl von Winkelpositionen an dem wenigstens einen Montagepunkt des wenigstens einen Wandelements mittels wenigstens eines Befestigungselements zu ermöglichen.

Demzufolge wird in der erfindungsgemäßen Anordnung durch das Bereitstellen des Exzenterelements und sein Zusammenwirken mit dem Wandelement der übergeordneten Struktur in einem Zustand, in welchem das Exzenterelement auf dem kreiszylindrischen Vorsprung des Gehäuses des linearen Betätigungselements aufsitzt, durch eine Verdrehung des Exzenterelements eine Anpassung der Position des Betätigungselements gegenüber dem Wandelement hinsichtlich der Verlagerungsrichtung des Druckstangenelements ermöglicht. Wenngleich hierbei selbstverständlich stets auch eine geringfügige Verschiebung des Betätigungselements in einer Richtung senkrecht zu der Verlagerungsrichtung des Druckstangenelements auftritt, so ist diese in aller Regel zu vernachlässigen bzw. hat keine weiteren Auswirkungen auf die Funktionsweise des Betätigungselements.

Während prinzipiell beliebige Befestigungselemente zur Verbindung des Exzenterelements mit dem Wandelement an dessen wenigstens einem Montagepunkt vorgesehen werden können, so kann in einer besonders einfachen Ausführungsform das Befestigungselement als Schraube ausgebildet sein, der wenigstens eine Montagepunkt als Gewindebohrung ausgebildet sein und der Befestigungsabschnitt ein Durchführen und Einschrauben der wenigstens einen Schraube in die Gewindebohrung in einer Mehrzahl von Winkelpositionen ermöglichen. Die Ausgestaltung des wenigstens einen Befestigungselements als Schraube ermöglicht einerseits eine einfache Montage der Anordnung und andererseits ein ebenso einfaches erneutes Lösen davon, um in einem bereits montierten Zustand der Anordnung eine Nacheinstellung oder Nachjustierung der Position des Betätigungselements bezüglich des Wandelements vornehmen zu können. Hierbei versteht es sich, dass der Befestigungsabschnitt des Exzenterelements so auszubilden sein sollte, dass die Anbringung des Befestigungselements das Exzenterelement fest und sicher in der entsprechenden Winkelposition fixiert und insbesondere ein unbeabsichtigtes Drehen davon verhindert wird.

Zu diesem Zweck und zu einer verbesserten Aufnahme von Kräften und Momenten in der erfindungsgemäßen Anordnung kann es vorteilhaft sein, wenn wenigstens zwei Gewindebohrungen in dem wenigstens einen Wandelement und zwei Schrauben als Befestigungselemente vorgesehen sind.

Alternativ oder zusätzlich kann der Befestigungsabschnitt des Exzenterelements als Rastscheibe mit einer Mehrzahl von definierten Durchgangspositionen für die wenigstens eine Schraube ausgebildet sein, wobei eine derartige Rastscheibe einerseits eine Mehrzahl von festen vordefinierten Winkelpositionen anbietet, was beispielsweise bei einer Montage von zwei einander gegenüberliegenden Exzenterelementen an dem Betätigungselement wünschenswert sein kann, während andererseits durch die Rastung ein unerwünschtes Drehen oder Abgleiten des Exzenterelements von vorn herein verhindert wird.

Alternativ könnte selbstverständlich im Gegensatz zu dem formschlüssigen Eingreifen zwischen wenigstens einer Schraube und einer entsprechenden Position innerhalb einer Rastscheibe auch einfach ein bogenförmiges Langloch an dem Exzenterelement bereitgestellt werden, was zwar einerseits eine Montage davon in einem beliebigen Winkel erlaubt, andererseits jedoch nur eine kraftschlüssige Befestigung des Exzenterelements ermöglicht, was unweigerlich zu einem erhöhten Risiko einer unerwünschten Drehung des Exzenterelements im montierten Zustand führt.

Wie bereits kurz angedeutet, kann das Betätigungselement mit zwei einander gegenüberliegenden kreiszylindrischen Vorsprüngen versehen sein, beiderseits des Betätigungselements ein jeweiliges Wandelement der übergeordneten Struktur mit einer jeweiligen kreisförmigen Durchbrechung vorgesehen sein und zwei Exzenterelemente zur jeweiligen Anbringung an den beiden Vorsprüngen vorgesehen sein. Auf diese Weise wird eine symmetrische Kraftaufnahme beiderseits der Wirkungsachse des Druckstangenelements erzielt, was der Entstehung von Biegemomenten in dem Betätigungselement entgegenwirkt.

Alternativ oder zusätzlich wäre selbstverständlich auch eine Anbringung mittels mehrerer entsprechender Gruppen von kreiszylindrischen Vorsprüngen, Durchbrechungen in entsprechenden Wandelementen und Exzenterelementen denkbar, welche beispielsweise linear entlang der Verlagerungsrichtung des Druckstangenelements hintereinander angeordnet sein könnten, um die gewünschte Festigkeit der Verbindung dieser Elemente sowie Kraftübertragung von dem Betätigungselement auf die übergeordnete Struktur sicherzustellen.

Wie ebenfalls bereits angedeutet, betrifft die vorliegende Erfindung gemäß einem zweiten Aspekt ein Kipperfahrzeug mit wenigstens einer schwenkbaren Seitenwand, welches eine erfindungsgemäße Anordnung der eben beschriebenen Art umfasst, wobei ein Fahrzeugkörper des Kipperfahrzeugs als die übergeordnete Struktur wirkt und das lineare Betätigungselement als eine Seitenwandpresse wirkt und ein Ausfahren des linearen Betätigungselements ein Schließen der Seitenwand hervorruft. Hierbei versteht es sich, dass unter dem Fahrzeugkörper des Kipperfahrzeugs in diesem Zusammenhang insbesondere ein Kipperaufbau verstanden sein kann, wobei die entsprechende Seitenwandpresse demzufolge unter der Ladefläche des Kipperaufbaus angeordnet sein kann und dementsprechend über ein Hebelsystem auf die Seitenwand wirken bzw. deren Schwenken antreiben kann.

Auf Grundlage der üblicherweise in einem derartigen Kipperfahrzeug herrschenden Größenverhältnisse kann es weiterhin vorteilhaft sein, wenn die Anordnung derart ausgebildet ist, dass durch eine Winkelverstellung des Exzenterelements eine Einstellung der Position des Betätigungselements entlang der Verlagerungsrichtung des Druckstangenelements über einen Bereich von etwa 7mm ermöglicht wird. Durch die in einer solchen Ausführungsform herrschenden Hebelverhältnisse kann insbesondere unter der Annahme, dass die zugeordnete Seitenwand eine Höhe von etwa 1,20m aufweist, eine Variation der Position der Oberkante der Seitenwand um etwa 10cm in ihrem geschlossenen Endzustand erreicht werden, wenn der Verlagerungsbereich des Betätigungselements von etwa 7mm voll ausgereizt wird.

Wenngleich das lineare Betätigungselement selbstverständlich beispielsweise auch ein linearelektrischer Antrieb oder ähnliches sein könnte, so kann es in dem momentan am häufigsten eingesetzten Bautyp von Kipperfahrzeugen durch einen Hydraulikzylinder gebildet sein, welcher mit einem Hydraulikkreis des Kipperfahrzeugs gekoppelt ist.

Weiterhin betrifft die vorliegende Erfindung ein Verfahren zum Montieren eines linearen Betätigungselements in einem derartigen Kipperfahrzeug, umfassend die Schritte eines Versetzens der schwenkbaren Seitenwand in ihren geschlossenen Zustand, eines Versetzens des linearen Betätigungselements in einen vollständig oder beinahe vollständig ausgefahrenen Zustand und ein Anordnen davon benachbart zu dem wenigstens einen Wandelement sowie eines Aufschiebens des wenigstens einen Exzenterelements in die Durchbrechung des wenigstens einen Wandelements und auf den wenigstens einen kreiszylindrischen Vorsprung des Betätigungselements sowie eines Befestigens davon mittels des wenigstens einen Befestigungselements in der entsprechenden Winkelposition.

Hierbei kann, indem das lineare Betätigungselements in einem nur beinahe vollständig ausgefahrenen Zustand bei einem geschlossenen Zustand der Seitenwand montiert wird, dafür gesorgt werden, dass stets eine gewisse Vorspannung auf die Seitenwand in einem vollständig ausgefahrenen Zustand des Betätigungselements wirkt, wobei durch geeignete Wahl des Ausfahrzustands des Betätigungselements während seiner Montage Sorge dafür getragen werden kann, dass kein übermäßiges Spiel verbleibt und demzufolge die Seitenwand und die Eckrungen nicht deformiert oder beschädigt werden.

Weiterhin kann das erfindungsgemäße Verfahren für ein Nachjustieren der Position des linearen Betätigungselements in einem bereits montierten Zustand die Schritte eines Lösens des wenigstens einen Befestigungselements, eines Drehens des Exzenterelements, bis die gewünschte Position des Betätigungselements erreicht ist, und eines erneuten Befestigens des Betätigungselements mittels des wenigstens einen Befestigungselements in der entsprechenden Winkelposition umfassen.

Weitere Merkmale und Vorteile der vorliegenden Erfindung werden aus der nachfolgenden Beschreibung einer Ausführungsform noch deutlicher werden, wenn diese zusammen mit den beiliegenden Figuren betrachtet wird. Diese zeigen im Einzelnen:
- Figur 1: eine erfindungsgemäße Anordnung während ihrer Montage in einer isometrischen Ansicht;
- Figur 2: die Anordnung aus Figur 1 in einem montierten Zustand in einer Seitenansicht;
- Figur 3: die Anordnung im montierten Zustand aus Figur 2 in einer Unteransicht; und
- Figuren 4a und 4b: Detailansichten der Wandelemente bzw. des Exzenterelements der Ausführungsform aus den Figuren 1 bis 3.

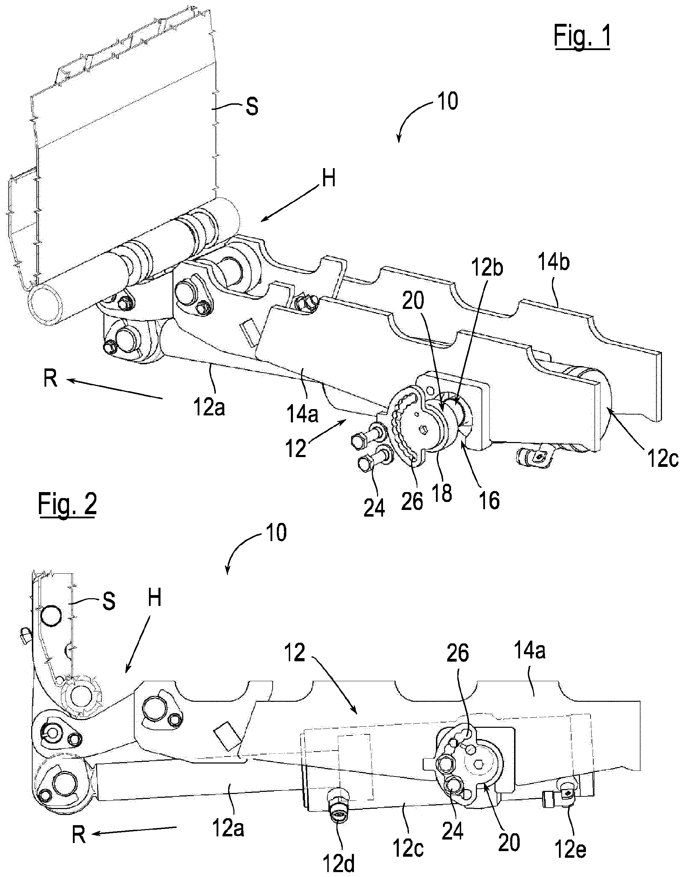

In den Figuren 1 bis 3 ist zunächst eine erfindungsgemäße Anordnung zur einstellbaren Anbringung eines linearen Betätigungselements an einer übergeordneten Struktur in verschiedenen Ansichten gezeigt und ganz allgemein mit dem Bezugszeichen 10 bezeichnet.

Die hier gezeigte konkrete Ausführungsform wird in einem nicht weiter dargestellten Kipperfahrzeug eingesetzt und das lineare Betätigungselement ist durch eine Seitenwandpresse 12 mit einem entlang einer Verlagerungsrichtung R verfahrbaren Druckstangenelement 12a gebildet, die in hydraulisch betreibbarer Weise eine Betätigung zum Hervorrufen einer Schwenkbewegung der Seitenwand S bewirken kann, wenn sie entsprechend mit Hydraulikfluid beauflagt wird. Hierzu ist eine aus dem Stand der Technik bereits bekannte Hebelkonstruktion H vorgesehen, welche ein Ausfahren des Druckstangenelements 12a des linearen Betätigungselements 12 in eine Schwenkbewegung der Seitenwand S umsetzen kann.

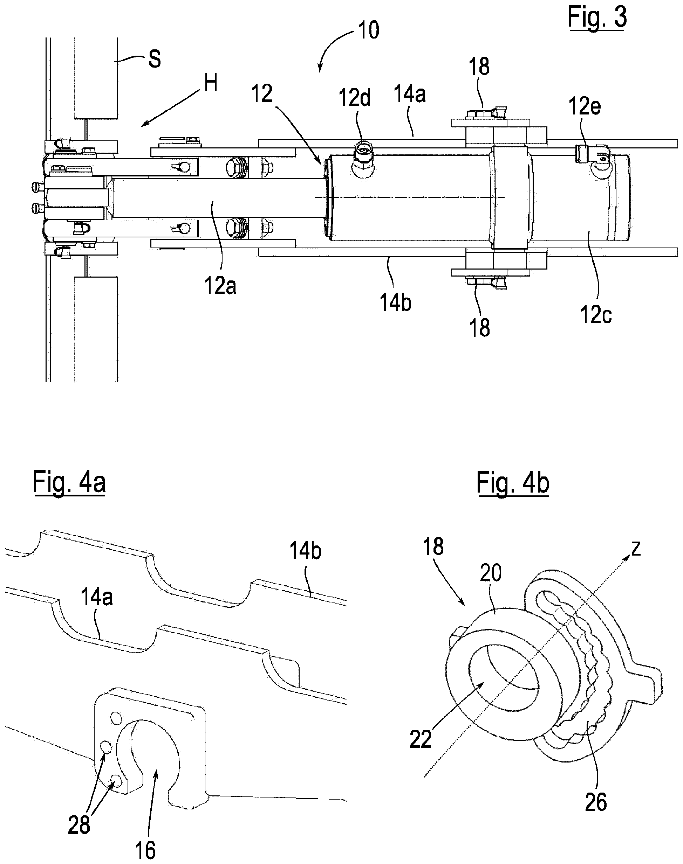

Da der maximale Hubweg des Betätigungselements 12 bauartbedingt vorgegeben ist und auch die vertikale geschlossene Stellung der Seitenwand S bezüglich weiterer Komponenten des Kipperfahrzeugs festgelegt ist, besteht die einzige Möglichkeit zum Ausgleich von Toleranzen oder zur Nachjustierung im Fall von Verschleiß in der gezeigten Anordnung 10 darin, die Position des linearen Betätigungselements 12 entlang der Verlagerungsrichtung R des Druckstangenelements 12a anzupassen. Hierbei sind zur Verbindung des Betätigungselements 12 mit dem Kipperfahrzeug zwei symmetrisch um das Betätigungselement 12 herum angeordnete Wandelemente 14a und 14b vorgesehen, welche dem Fahrzeugkörper des Kipperfahrzeugs zugeordnet sind und beispielsweise unterhalb der Ladefläche des Kipperfahrzeugs vertikal erstreckend angeordnet sein können und welche jeweilige kreisförmige Durchbrechungen 16 aufweisen. Hierbei ist in den Figu-ren zu beachten, dass insbesondere in den Darstellungen aus Figur 1 und Figur 2 das weiter hinten liegende Wandelement 14b teilweise oder ganz verdeckt ist, so dass im Folgenden größtenteils auf das vorne liegende Wandelement 14a abgestellt werden wird. Die Funktion der beiden Wandelemente 14a und 14b ist jedoch ebenso wie ihre Ausgestaltung völlig analog zu betrachten und es sei ferner auf die vergrößerte Detailansicht der Wandelemente 14a und 14b in Fig. 4a verwiesen, in welcher die entsprechende Durchbrechung 16 gut zu erkennen ist.

In dem in Figur 1 gezeigten und noch nicht abschließend montierten Zustand ist ferner ersichtlich, dass in die kreisförmige Ausnehmung 16 des Wandelements 14a ein kreiszylindrischer Vorsprung 12b hineinragt, welcher senkrecht zu der Verlagerungsrichtung R von einem Gehäuse 12c des Betätigungselements vorsteht und zu welchem symmetrisch gegenüberliegend ein in den Figuren 1 und 2 nicht sichtbarer weiterer Vorsprung 12b existiert, welcher in eine entsprechende Ausnehmung 16 in dem anderen Wandelement 14b hineinragt. Abhängig von der konkreten vorgesehenen Montageposition des linearen Betätigungselements 12 entlang der Verlagerungsrichtung R werden die beiden einander gegenüberliegenden Vorsprünge 12b an beiden Seiten des Gehäuses 12c des Betätigungselements 12 an leicht variablen Positionen innerhalb der kreisförmigen Durchbrechungen 16 der Wandelemente 14a und 14b positioniert sein.

Um nun eine Befestigung des Betätigungselements 12 in genau dieser konkreten gewünschten Position gegenüber den Wandelementen 14a und 14b und somit dem Fahrzeugkörper des entsprechenden Flurförderzeugs ermöglichen zu können, umfasst die Anordnung 10 ferner zwei Exzenterelemente 18, von welchen in Figur 1 zunächst einmal ebenfalls nur eines gezeigt ist. Wie insbesondere in der vergrößerten Ansicht der in Figur 1 nicht zu sehenden Rückseite des Exzenterelements 18 aus Figur 4b noch einmal deutlicher dargestellt ist, umfasst dieses Exzenterelement 18 in seinem kreiszylindrisch ausgebildeten Körperabschnitt 20 eine bezüglich seiner Zylinderachse Z exzentrisch angeordnete Aufnahmeöffnung 22.

Hierbei ist in den Exzenterelementen 18 der Außenumfang des Körperabschnitts 20 auf die Maße der kreisförmigen Durchbrechungen 16 der Wandelemente 14a und 14b abgestimmt, während wiederum die Aufnahmeöffnungen 22 auf die Außenmaße der kreiszylindrischen Vorsprünge 12b an dem Gehäuse 12c des Betätigungselements 12 abgestimmt sind.

Somit ist ein Aufschieben der Exzenterelemente 18 in jeweils genau einer konkreten Winkelausrichtung gegenüber den Wandelementen 14a und 14b sowie dem linearen Betätigungselement 12 in die kreisförmigen Durchbrechungen 16 und mit den Aufnahmeöffnungen 22 auf die kreiszylindrischen Vorsprünge 12b möglich. In dieser konkreten Winkelposition kann dann eine Befestigung des jeweiligen Exzenterelements 18 mithilfe zweier als Schrauben ausgebildeter Befestigungselemente 24 vorgenommen werden, welche durch eine an dem Exzenterelement 18 vorgesehenen Rastscheibe 26 zu dessen Fixierung hindurchgeführt und in eine jeweilige Gewindebohrung 28 in dem Wandelement 14a bzw. 14b eingeschraubt werden können.

In ähnlicher Weise kann durch ein Herausschrauben der Schrauben 24 aus den Gewindebohrungen 28 die feste Verbindung zwischen dem linearen Betätigungselement 12 und den Wandabschnitten 14a und 14b wieder gelöst werden und anschließend durch ein Drehen der Exzenterelemente 18 in ihrem in die Durchbrechungen 16 der Wandelemente 14a und 14b eingeschobenen sowie auf die zylindrischen Vorsprünge 12b aufgeschobenen Zustand eine Verlagerung des Betätigungselements 12 entlang der Verlagerungsrichtung R nach vorne oder hinten erzielt werden. Anschließend kann durch ein erneutes Einschrauben der Schrauben 24 in die Gewindebohrungen 28 eine erneute Arretierung des linearen Betätigungselements 12 in dieser Position vorgenommen werden. Auch eine leichte Einstellung des Betätigungselements 12 in einer Richtung senkrecht zur Verlagerungsrichtung R könnte hierbei vorgenommen werden, beispielsweise um Fertigungstoleranzen auszugleichen, indem die Exzenterelemente 18 geringfügig gegeneinander verdreht werden.

Wie insbesondere aus der Ansicht von unten aus Figur 3 hervorgeht, sind die beiden Wandelemente 14a und 14b in einer symmetrischen Weise beiderseits des Betätigungselements 12 in dessen montiertem Zustand angeordnet, wobei die Verlagerungsrichtung R auf die Symmetrieebene zwischen den beiden Wandelementen 14a und 14b fällt. Ferner sind in der Unteransicht aus Figur 3 noch Hydraulikanschlüsse 12d und 12e zu erkennen, mittels welcher das lineare Betätigungselement 12 über einen Hydraulikkreislauf des Flurförderzeugs mit unter Druck stehendem Hydraulikfluid zu dessen Betätigung und zum Schwenken der Seitenwand S antreibbar ist.

## Patentansprüche

1. Anordnung (10) zur einstellbaren Anbringung eines linearen Betätigungselements (12) an einer übergeordneten Struktur, umfassend:
- das lineare Betätigungselement (12), welches ein Gehäuse (12c) und ein aus dem Gehäuse (12c) herausragendes und gegenüber dem Gehäuse (12c) in einer Verlagerungsrichtung (R) verlagerbares Druckstangenelement (12a) aufweist,
wobei das Gehäuse (12c) wenigstens einen kreiszylindrischen Vorsprung (12b) aufweist, welcher in einer Richtung senkrecht zu der Verlagerungsrichtung (R) des Druckstangenelements (12a) nach außen vorsteht;
- wenigstens ein der übergeordneten Struktur zugeordnetes Wandelement (14a, 14b), welches eine kreisförmige Durchbrechung (16) und wenigstens einen Montagepunkt (28) aufweist;
**gekennzeichnet durch**:
- wenigstens ein Exzenterelement (18) mit einem kreiszylindrischen Körperabschnitt (20) mit einer Zylinderachse (Z),
wobei der Umfang des Körperabschnitts (20) auf die kreisförmige Durchbrechung (16) des wenigstens einen Wandelements (14a, 14b) angepasst und exzentrisch zu der Zylinderachse (Z) eine Aufnahmeöffnung (22) für den wenigstens einen kreiszylindrischen Vorsprung (12b) des Gehäuses (12c) des Betätigungselement (12) vorgesehen ist,
wobei das Exzenterelement (18) ferner einen Befestigungsabschnitt (26) aufweist, welcher dazu eingerichtet ist, eine Befestigung davon in einer Mehrzahl von Winkelpositionen an dem wenigstens einen Montagepunkt (28) des wenigstens einen Wandelements (14a, 14b) mittels wenigstens eines Befestigungselements (24) zu ermöglichen.

2. Anordnung (10) nach Anspruch 1,
wobei das wenigstens eine Befestigungselement (24) als Schraube ausgebildet ist, der wenigstens eine Montagepunkt (28) als Gewindebohrung ausgebildet ist und der Befestigungsabschnitt (26) ein Durchführen und Einschrauben der wenigstens einen Schraube in die Gewindebohrung in der Mehrzahl von Winkelpositionen ermöglicht.

3. Anordnung (10) nach Anspruch 2,
wobei wenigstens zwei Gewindebohrungen in dem wenigstens einen Wandelement (14a, 14b) und zwei Schrauben als Befestigungselemente (24) vorgesehen sind.

4. Anordnung (10) nach Anspruch 2 oder 3,
wobei der Befestigungsabschnitt (26) als Rastscheibe mit einer Mehrzahl von definierten Durchgangspositionen für die wenigstens eine Schraube ausgebildet ist.

5. Anordnung (10) nach einem der vorhergehenden Ansprüche,
wobei das Betätigungselement (12) mit zwei einander gegenüberliegenden kreiszylindrischen Vorsprüngen (12b) versehen, beiderseits des Betätigungselements (12) ein jeweiliges Wandelement (14a, 14b) der übergeordneten Struktur vorgesehen ist und zwei Exzenterelemente (18) zur jeweiligen Anbringung an den beiden Vorsprüngen (12b) vorgesehen sind.

6. Kipperfahrzeug mit wenigstens einer schwenkbaren Seitenwand (S), umfassend wenigstens eine Anordnung (10) nach einem der vorhergehenden Ansprüche
wobei ein Fahrzeugkörper des Kipperfahrzeugs als die übergeordnete Struktur wirkt und das lineare Betätigungselement (12) als eine Seitenwandpresse wirkt und ein Ausfahren des linearen Betätigungselements ein Schließen der Seitenwand (S) hervorruft.

7. Kipperfahrzeug nach Anspruch 6,
wobei die Anordnung (10) derart ausgebildet ist, dass durch eine Winkelverstellung des Exzenterelements (18) eine Einstellung der Position des Betätigungselements (12) entlang der Verlagerungsrichtung (R) des Druckstangenelements (12a) über einen Bereich von etwa 7 mm ermöglicht ist.

8. Kipperfahrzeug nach Anspruch 6 oder 7,
wobei das lineare Betätigungselement (12) durch einen Hydraulikzylinder gebildet ist, welcher mit einem Hydraulikkreis des Kipperfahrzeugs gekoppelt ist.

9. Verfahren zum Montieren eines linearen Betätigungselements (12) in einem Kipperfahrzeug nach einem der Ansprüche, umfassend die Schritte:
- Versetzen der schwenkbaren Seitenwand (S) in ihren geschlossenen Zustand;
- Versetzen des linearen Betätigungselements (12) in einen vollständig oder beinahe vollständig ausgefahrenen Zustand und Anordnen davon benachbart zu dem wenigstens einen Wandelement (14a, 14b); und
- Aufschieben des wenigstens einen Exzenterelements (18) in die Durchbrechung (16) des wenigstens einen Wandelements (14a, 14b) und auf den wenigstens einen kreiszylindrischen Vorsprung (12b) des Betätigungselements (12) und Befestigen davon mittels des wenigstens einen Befestigungselements (24) in der entsprechenden Winkelposition.

10. Verfahren nach Anspruch 9, ferner umfassend die Schritte:
- Lösen der wenigstens einen Befestigungselements (24);
- Drehen des Exzenterelements (18), bis eine gewünschte Position des Betätigungselements (12) erreicht ist; und
- erneutes Befestigen des Betätigungselements (12) mittels des wenigstens einen Befestigungselements (24) in der entsprechenden Winkelposition.

## Claims

1. Assembly (10) for the adjustable attachment of a linear operating element (12) on a superordinate structure, comprising:
- the linear operating element (12), having a housing (12c) and a pressure rod element (12a) extending out of the housing (12c) and being displaceable with respect to the housing (12c) in a displacement direction (R),
wherein the housing (12c) has a circular cylindrical projection (12b), which projects in a direction perpendicular to the displacement direction (R) of the pressure rod element (12a) to the outside;
- at least one wall element (14a, 14b) assigned to the superordinate structure, which has a circular through hole (16) and at least one mounting point (28); **characterized by**:
- at least one excentre element (18) with a circular cylindrical body section (20) with a cylinder axis (Z),
wherein the circumference of the body section (20) is matched to the circular through hole (16) of the at least one wall element (14a, 14b), and excentric to the cylinder axis (Z) there is provided a receiving opening (22) for the at least one circular cylindrical projection (12b) of the housing (12c) of the operating element (12),
wherein the excentre element (18) further has an attachment section (26) which is adapted to facilitate an attachment thereof in a plurality of angular positions on the at least one mounting point (28) of the at least one wall element (14, 14b) by means of at least one attachment element (24).

2. Assembly (10) according to claim 1,
wherein the at least one attachment element (24) is formed as a screw, the at least one mounting point (28) is formed as a threaded hole, and the attachment section (26) facilitates an insertion and screwing of the at least one screw into the threaded hole in the plurality of angular positions.

3. Assembly (10) according to claim 2,
wherein at least two threaded holes in the at least one wall element (14a, 14b) and two screws as attachment elements (24) are provided.

4. Assembly (10) according to claim 2 or 3,
wherein the mounting section (26) is formed as a locking disk with a plurality of defined insertion positions for the at least one screw.

5. Assembly (10) according to any of the preceding claims,
wherein the operating element (12) is provided with two circular cylindric projections (12b) facing one another, at both sides of the operating element (12) a respective wall element (14a, 14b) of the superordinate structure is provided, and two excentre elements (18) for the respective attachment to the two projections (12b) are provided.

6. Tipper truck with a pivotable side wall (S), comprising at least one assembly (10) according to one of the preceding claims,
wherein a truck body of the tipper truck functions as the superordinate structure and the linear operating element (12) functions as a side wall press, and an extension of the linear operating element causes a closing of the side wall (S).

7. Tipper truck according to claim 6,
wherein the assembly (10) is formed such that by means of an angular shift of the excentre element (18) an adjustment of the position of the operating element (12) along the displacement direction (R) of the pressure rod element (12a) over a range of about 7 mm is made possible.

8. Tipper truck according to claim 6 or 7,
wherein the linear operating element (12) is formed by a hydraulic cylinder which is coupled to a hydraulic circuit of the tipper truck.

9. Method for mounting a linear operating element (12) in a tipper truck according to any of the claims, comprising the steps:
- transferring the pivotable side wall (S) into its closed state;
- transferring the linear operating element (12) into a fully or almost fully extended state and positioning it adjacent to at least one wall element (14a, 14b); and
- sliding the at least one excentre element (18) into the through hole (16) of the at least one wall element (14a, 14b) and onto the circular cylindrical projection (12b) of the operating element (12) and attaching it by means of the at least one attachment element (24) in the corresponding angular position.

10. Method according to claim 9, further comprising the steps:
- releasing the at least one attachment element (24);
- rotating the excentre element (18) until a desired position of the operating element (12) is reached; and
- newly attaching the attachment element (12) by means of the at least one attachment element (24) in the corresponding angular position.

## Revendications

1. Agencement (10) pour le montage réglable d'un élément d'actionnement linéaire (12) sur une structure supérieure, comprenant :
- l'élément d'actionnement linéaire (12), qui présente un boîtier (12c) et un élément de tige de pression (12a) dépassant du boîtier (12c) et pouvant être déplacé par rapport au boîtier (12c) dans une direction de déplacement (R), dans lequel le boîtier (12c) présente au moins une saillie cylindrique circulaire (12b) qui fait saillie vers l'extérieur dans une direction perpendiculaire à la direction de déplacement (R) de l'élément de tige de pression (12a) ;
- au moins un élément de paroi (14a, 14b) associé à la structure supérieure, qui présente une ouverture circulaire (16) et au moins un point de montage (28) ; **caractérisé par :**
- au moins un élément excentrique (18) avec une section de corps (20) cylindrique circulaire avec un axe de cylindre (Z),
dans lequel la circonférence de la section de corps (20) est adaptée à la ouverture circulaire (16) dudit au moins un élément de paroi (14a, 14b) et une ouverture de réception (22) est prévue excentriquement par rapport à l'axe de cylindre (Z) pour ledit au moins une saillie (12b) cylindrique circulaire du boîtier (12c) de l'élément d'actionnement (12),
dans lequel l'élément excentrique (18) comprend en outre une partie de fixation (26) adaptée pour permettre sa fixation dans une pluralité de positions angulaires sur ledit au moins un point de montage (28) dudit au moins un élément de paroi (14a, 14b) au moyen d'au moins un élément de fixation (24).

2. Agencement (10) selon la revendication 1,
dans lequel ledit au moins un élément de fixation (24) est adapté sous forme de vis, ledit au moins un point de montage (28) est adapté sous forme de trou taraudé, et ladite partie de fixation (26) permet le passage et le vissage de ladite au moins une vis dans ledit trou taraudé dans ladite pluralité de positions angulaires.

3. Agencement (10) selon la revendication 2,
dans lequel au moins deux trous taraudés sont prévus dans ledit au moins un élément de paroi (14a, 14b) et deux vis sont prévues comme éléments de fixation (24).

4. Agencement (10) selon la revendication 2 ou 3,
dans lequel la partie de fixation (26) est conçue comme une rondelle d'encliquetage avec une pluralité de positions de passage définies pour ladite au moins une vis.

5. Agencement (10) selon l'une des revendications précédentes,
dans lequel l'élément d'actionnement (12) est pourvu de deux protubérances (12b) cylindriques circulaires opposées, un élément de paroi (14a, 14b) respectif de la structure supérieure est prévu de part et d'autre de l'élément d'actionnement (12), et deux éléments excentriques (18) sont prévus pour être montés respectivement sur les deux protubérances (12b).

6. Véhicule à benne basculante ayant au moins une paroi latérale (S) pivotante, comprenant au moins un agencement (10) selon l'une des revendications précédentes,
dans lequel une caisse du véhicule à benne basculante agit comme la structure supérieure et l'élément d'actionnement linéaire (12) agit comme une presse de paroi latérale, et une extension de l'élément d'actionnement linéaire provoque une fermeture de la paroi latérale (S).

7. Véhicule à benne basculante selon la revendication 6,
dans lequel l'agencement (10) est adapté de telle manière qu'un réglage angulaire de l'élément excentrique (18) permet de régler la position de l'élément d'actionnement (12) le long de la direction de déplacement (R) de l'élément de tige de poussée (12a) sur une plage d'environ 7 mm.

8. Véhicule à benne basculante selon la revendication 6 ou 7,
dans lequel l'élément d'actionnement linéaire (12) est formé par un vérin hydraulique couplé à un circuit hydraulique du véhicule à benne basculante.

9. Procédé de montage d'un élément d'actionnement linéaire (12) dans un véhicule à benne basculante selon l'une des revendications, comprenant les étapes consistant à :
- mettre en place la paroi latérale pivotante (S) dans son état fermé ;
- placer l'actionneur linéaire (12) dans un état complètement ou presque complètement déployé et le placer de manière adjacente audit au moins un élément de paroi (14a, 14b) ; et
- faire glisser ledit au moins un élément excentrique (18) dans l'ouverture (16) dudit au moins un élément de paroi (14a, 14b) et sur ladite au moins une saillie cylindrique circulaire (12b) de l'élément d'actionnement (12) et le fixer au moyen dudit au moins un élément de fixation (24) dans la position angulaire correspondante.

10. Procédé selon la revendication 9, comprenant en outre les étapes suivantes :
- desserrer ledit au moins un élément de fixation (24) ;
- tourner l'élément excentrique (18) jusqu'à ce qu'une position souhaitée de l'élément d'actionnement (12) soit atteinte ; et
- fixer à nouveau l'élément d'actionnement (12) au moyen dudit au moins un élément de fixation (24) dans la position angulaire correspondante.
